# EUROPEAN PATENT SPECIFICATION

(11) **EP 1 361 663 B1**
(45) Date of publication and mention of the grant of the patent: **13.08.2008**
(21) Application number: 02010480.8
(22) Date of filing: 08.05.2002
(51) Int. Cl.: H04B 1/16, H04B 1/10

(54) **Noise detection in FM broadcast**
Rauschsignaldetektion in einem UKW Rundfunkempfänger
Détection du bruit dans un récepteur M.F. de radio-diffusion

(43) Date of publication of application: 12.11.2003
(73) Proprietor: Sony Deutschland GmbH, 10785 Berlin (DE)
(72) Inventor: Wildhagen, Jens SONY Deutschland GmbH, 70327 Stuttgart (DE)
(74) Representative: Müller - Hoffmann & Partner

(56) References cited:
- EP-A- 0 418 036
- EP-A- 1 081 870
- US-A- 5 784 465

## Description

The invention is related to the detection of noise in FM receivers, in particular to the increasing of the reliability of a noise indication in a stereophonic FM broadcast receiver, in which a noise indication signal is averaged for further processing.

Such a noise detection in FM broadcast by a demodulation of the quadrature component of the difference signal is described in the Applicants European Patent Application EP 01 081 870 A1 "Detection of noise in a frequency demodulated fm-audio broadcast signal".

This noise detection might e.g. used in a denoising system described for example in the Applicants European Patent Application EP 01 289 155 A1 "Noise reduction in a stereo receiver".

In the Applicants European Patent Application EP 01 289 156 A1 "Noise reduction in a stereo receiver comprising an expander" such a denoising system is used in combination with a compander system.

The noise detection which relies on a noise indication signal which is averaged for further processing and is e.g. described in the above referenced documents is reliable in case of linear FM transmitters. However, in some FM transmitters, especially in smaller stations, the used multiplexers make use of limiters to avoid an overmodulation of the FM modulator. These limiters lead to distortions in the noise indication signal of the receiver.

Further, in case of distortions in the transmitter, produced for example by a clipping in the multiplexer because of a multiplex signal that exceeds the maximum allowed frequency deviation of the FM standard, distortions in the multiplex signal occur. These distortions do not disturb the audio quality, but they disturb the noise indication signal, since the quadrature component of the difference signal is used as noise indication signal. Thus, the receiver detects noise distortions in the noise indication signal (by demodulation of the quadrature component of the difference signal), even in case of a distortion free reception.

Moreover, in case of a very narrowband receiver, the FM demodulator produces harmonic distortions. An audio signal with high amplitude, i. e. high frequency deviation has a high bandwidth. A limitation of the FM bandwidth leads to distortions in the FM demodulated signal. In case of high neighbour channel distortions, the bandwidth of the IF filter must be very narrow. A very narrow IF filter leads to distortions in the FM demodulated signal. The higher the audio signal amplitude, the higher the distortions in the noise indication signal caused by distortions in the FM demodulated signal. These distortions lead to an increased noise power estimation that leads e.g. to a reduced performance gain of a denoising system or the stereo to mono blending.

Therefore, it is the object of the present invention to provide method to increase the reliability of a noise indication signal and a FM receiver capable of working according to said method.

The method according to the present invention is defined in independent claim 1 and the FM broadcast receiver according to the present invention is defined in independent claim 12. Preferred embodiments thereof are respectively defined in the respective following subclaims. A computer program product according to the present invention is defined in claim 10 and a computer readable storing medium according to the present invention is defined in claim 11.

The method to increase the reliability of a noise indication in a stereophonic FM broadcast receiver, in which a noise indication signal is averaged for further processing, according to the present invention comprises the step of changing parameters of the averaging based on the received stereo signal or derivatives thereof.

According to the present invention, preferably said changing of parameters of the averaging is a selection of the bandwidth of an averaging lowpass filter. This case includes a weighting of the input values (or signal) and/or a selection how many input values (or what time of the input stream) should be used for the averaging.

According to the present invention, alternatively or additionally preferably said changing of parameters of the averaging is an enabling and disabling of an averaging unit. Also in this case, the averaging unit is preferably a lowpass filter.

According to the present invention, further alternatively or additionally preferably said changing of parameters of the averaging is a weighting of a demodulated quadrature signal of a difference signal derived from the received stereo signal

According to the present invention, preferably said parameters are changed dependent on an instantaneous signal amplitude of a multiplex signal derived from the received stereo signal. In this case, in particular, the bandwidth might be selected to be very narrow or the averaging unit might be disabled in case the instantaneous signal amplitude of a multiplex signal derived from the received stereo signal has a high instantaneous amplitude.

According to the present invention, alternatively or additionally preferably said parameters are changed dependent on a ratio instantaneous noise indication signal amplitude to average noise indication signal amplitude, both derived from the received stereo signal. In this case, in particular, the bandwidth might be selected to be very narrow or the averaging unit might be disabled in case the ratio instantaneous noise indication signal amplitude to average noise indication signal amplitude increased fast for a short time period.

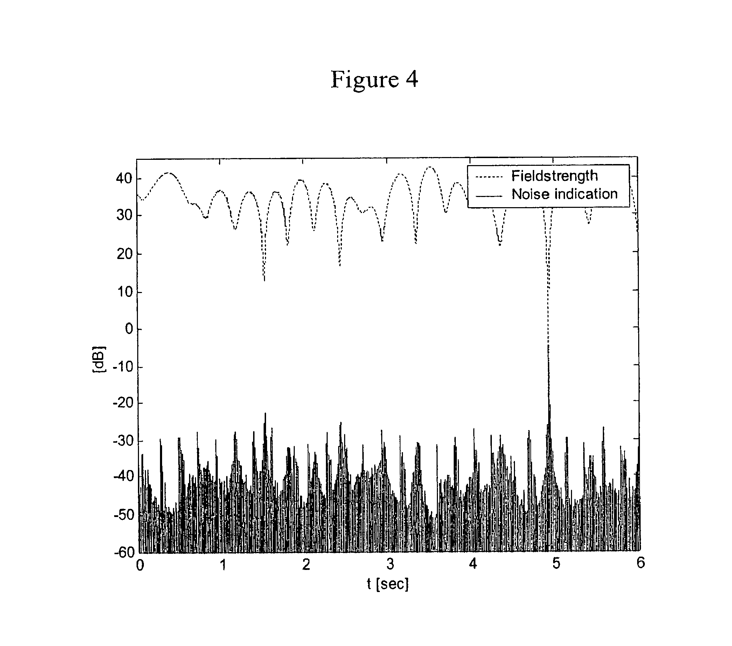

According to the present invention, further alternatively or additionally preferably said parameters are changed dependent on an instantaneous fieldstrength of the received stereo signal. In this case, in particular, the bandwidth might be selected to be very narrow or the averaging unit might be disabled in case the instantaneous fieldstrength decreased fast for a short time period, e. g. as shown in Fig. 4 below.

According to the present invention, respective parameters of a respective averaging might be changed based on a respective subband in which the received stereo signal or derivatives thereof are divided for processing.

According to the present invention, said noise indication signal might be used to control a sliding stereo to mono transition of a stereo output signal corresponding to the received stereo signal, to denoise the received stereo signal, or to perform an alternative frequency or transmission system switching in the stereophonic broadcast receiver.

A computer program product according to the present invention comprises computer program means adapted to perform the method steps as defined above when being executed on a computer, digital signal processor, or the like.

A computer readable storage medium according to the present invention stores thereon a computer program product as defined above.

A FM broadcast receiver according to the present invention in which a noise indication signal is averaged for further processing, comprises a control unit for changing parameters of the averaging based on the received stereo signal or derivatives thereof.

In a FM broadcast receiver according to the present invention said changing of parameters of the averaging is preferably a selection of the bandwidth of an averaging lowpass filter.

In a FM broadcast receiver according to the present invention said changing of parameters of the averaging might further preferably or alternatively be an enabling and disabling of an averaging unit. In this case, the averaging unit is preferably a lowpass filter. Further, the control unit might preferably change the parameters of the averaging based on signals and according to rules as described above for the method according to the present invention. Alternatively, a weighting of the noise indication signal, i. e. the averaging unit input signal can be employed.

A receiver according to the present invention might comprise a respective control unit for every respective subband in which the received stereo signal or derivatives thereof are divided for processing.

A receiver according to the present invention might use said noise indication signal to control a sliding stereo to mono transition of a stereo output signal corresponding to the received stereo signal, to denoise the received stereo signal, or to perform an alternative frequency or transmission system switching in the stereophonic broadcast receiver.

Therewith, according to the present invention distortions in the noise indication signal due to a limiting in the FM transmitter or a narrow bandwidth of the receiver are avoided due to the specific changing of parameters of the averaging based on the received stereo signal or derivatives thereof. As is self-evident from this feature, the averaging process according to the present invention is not a strict calculation or building of the average value, but might be influenced by parameters, e.g. by the decision whether or not to include a specific value in the averaging process, to weight a specific value before the actual building of the average value is performed, and/or how many values should be averaged and/or how the noise indication signal is weighted.

The present invention, its features and advantages will be further elucidated from the following detailed description of an exemplary embodiment thereof taken in conjunction with the accompanying figures, in which:
- **Fig. 1**: shows fieldstrength and noise indication signals in an AWGN channel with distortions in the noise indication signal caused by a clipping in the transmitter,
- **Fig. 2**: shows fieldstrength and noise indication signals in an AWGN channel without distortions in the noise indication signal,
- **Fig. 3**: depicts the instantaneous fieldstrengths and the noise indication signals in a wireless communications channel without distortions caused by the transmitter/IF filter,
- **Fig. 4**: depicts the instantaneous fieldstrengths and the noise indication signals in a wireless communications channel with distortions caused by the transmitter/IF filter, and
- **Fig. 5**: shows a block diagram of a receiver with noise detection circuit according to the present invention.

According to the exemplary embodiment the noise gets detected by a demodulation of the quadrature component of the modulated difference signal, as described in the above referenced Applicants European Patent Application EP 01 081 870 A1 "Detection of noise in a frequency demodulated fm-audio broadcast signal" .

In case of the demodulation of a multiplex signal with a compressed difference signal as described in the Applicants European Patent Application EP 01 289 156 A1 "Noise reduction in a stereo receiver comprising an expander" the noise indication signal is calculated by a subtraction of the expanded difference signal from the DSB demodulated difference signal (or vice versa).

In order to avoid distortions of the noise indication signal, according to the described embodiment of the present invention, the averaging lowpass filters that calculate the average noise power (in the circuits described in both of the before referenced European Patent Applications the average noise power of each subband) can be switched on and off (enable, disable). The averaging lowpass filters are switched on and off depending on different parameters. As mentioned above, alternatively also the bandwidth of the averaging lowpass filters could be restricted instead of a complete disabling to achieve a limiting weighting of a disturbed noise indication signal. Another method is a weighting of the noise indication signal.

According to the preferred embodiment of the present invention, in an AWGN channel (stationery receiver), the averaging lowpass filters are switched off either depending on the instantaneous signal amplitude (power) of the multiplex signal, the ratio instantaneous noise indication signal amplitude (power) to average noise indication signal amplitude (power) or a combination of both. Thus, the distortions in the multiplex signal, caused by a narrow IF filter bandwidth or by the transmitter (limiter, ...) do not distribute to the noise indication signal.

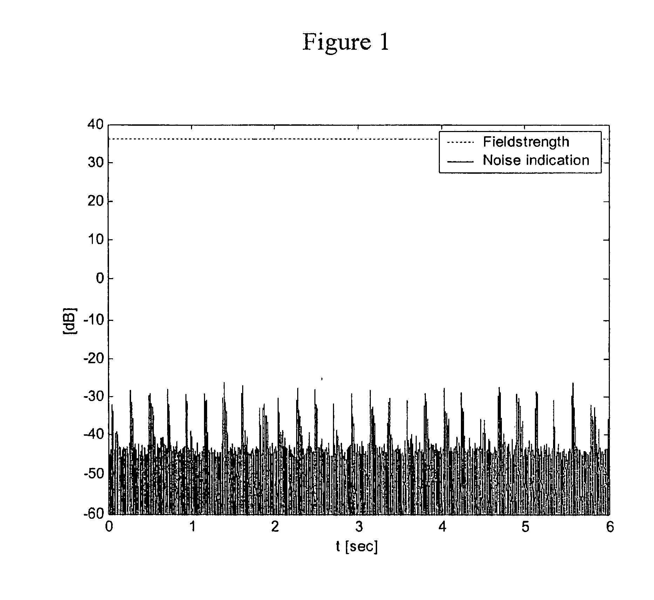

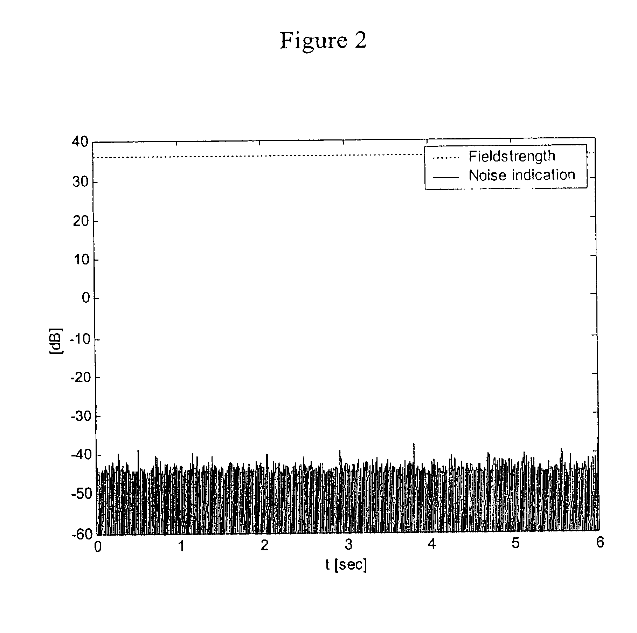

Fig. 1 depicts the fieldstrength and the noise indication signal in an AWGN channel with distortions in the noise indication signal caused by the transmitter/receiver, e.g. by a clipping in the transmitter. The distortions (in fig. 1 the peaks) in the noise indication signal would lead to a false noise indication and therefore to a wrong denoising, stereo to mono transition, and/or AF strategy. Fig. 2 depicts the fieldstrength and the noise indication signal in an AWGN channel without distortions in the noise indication signal. Both figures 1 and 2 show a constant fieldstrength (carrier-to-noise-ratio CNR) of around 37 dB. The difference in the noise indication signal can clearly be seen: Fig. 2 depicts a noise indication signal with averaged maximum values of around -45 dB, whereas in fig. 1 many peaks of the noise indication signal have a value of around -30 dB.

In a wireless communications channel, the noise indication signal can increase very fast for a very short time period. In a deep fade, the noise indication signal contains a high noise power and the audio signal also contains a high multiplex signal amplitude/power, caused by the distortion of the fade itself. Thus, the ratio instantaneous noise indication signal amplitude (power) to average noise indication amplitude (power) and the signal amplitude (power) of the multiplex signal might not always be sufficient for a detection of distortions caused by the channel or the transmitter/IF filter (because fading effects might result in the same noise indication signals as a clipping in the transmitter does).

In this case, another additional criterion should be used to decide between distortions caused by the channel and distortions caused by the transmitter/IF filter. The fieldstrength gives sufficient information about fades. In case the instantaneous fieldstrength is high (no fade of the fieldstrength) the distortions are most likely to be caused by the transmitter/IF filter. Thus, the averaging filters of the noise indication signal are switched off as described above. In case of a fade, the instantaneous fieldstrength is low. In this case, the averaging filters of the noise indication signal are not switched off.

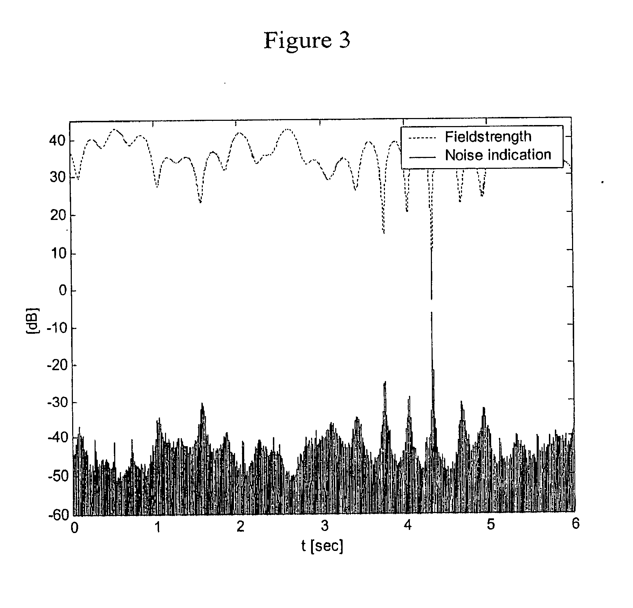

Figure 3 and 4 depict the instantaneous fieldstrengths and the noise indication signals in a wireless communications channel with and without distortions caused by the transmitter/IF filter. In particular, fig. 3 shows the fieldstrength and noise indication signal in COST207 Rural Area wireless communications channel (Doppler frequency = 2 Hz) without distortions in the noise indication signal caused by a clipping in the transmitter and fig. 4 shows the fieldstrength and noise indication signal in COST207 Rural Area wireless communications channel (Doppler frequency = 2 Hz) with distortions in the noise indication signal caused by a clipping in the transmitter. Both figures 3 and 4 show a varying fieldstrength of around 25 to 40 dB with some deep fades around 15 dB and lower. The difference in the noise indication signal can clearly be seen: Fig. 3 depicts a noise indication signal with an averaged maximum value of around -45 dB with some peaks rising to around -35 dB, whereas in fig. 4 many peaks of the noise indication signal rise to around -35 dB. In particular, it can be observed that in both cases between a time of 4 and 5 seconds a particular high noise indication signal peak (the highest in the shown example) of around -10 dB corresponds to a particular low fieldstrength of around -8 dB (the lowest in the shown example).

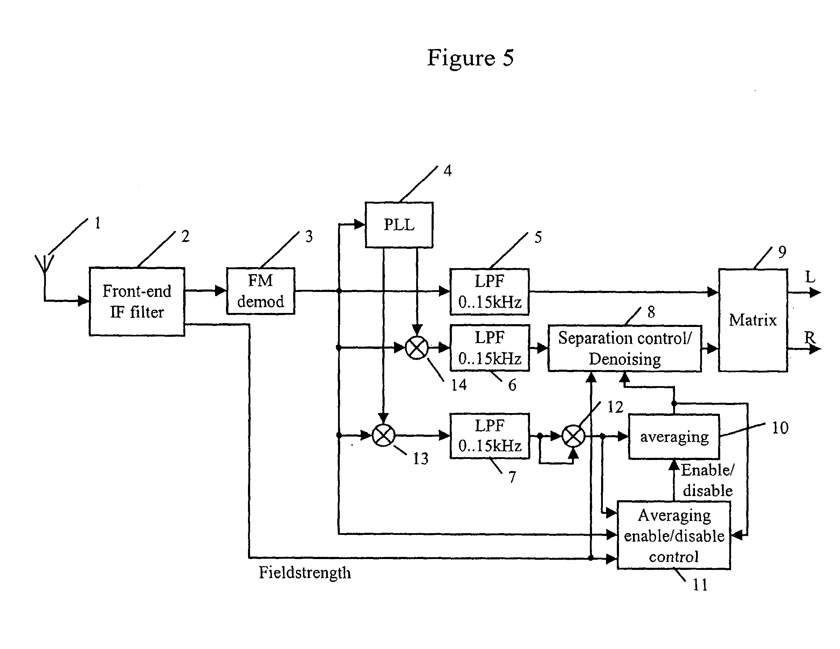

Figure 5 depicts a block diagram of a receiver with noise detection circuit according to the present invention.

A stereo signal received through an antenna 1 is passed to a front-end IF filter stage 2 to be supplied to a FM demodulator 3. The front-end IF filter stage 2 further outputs a fieldstrength indication signal. The output signal of the FM demodulator 3 is input to a PLL circuit 4, to a first lowpass filter 5, to a second lowpass filter 6 via a first mixer 14, to a third lowpass filter 7 via a second mixer 13, and to a control unit 11 for controlling the averaging of the noise indication signal according to the present invention, which control unit 11 also receives the fieldstrength indication signal output by the front-end IF filter stage 2.

The first lowpass filter 5 with a passband of 0 to 15 kHz outputs the stereo sum signal to a matrix circuit 9. The first mixer 14 which also receives an I-signal which is in phase to the 38 kHz subcarrier of the received stereo signal from the PLL circuit 4 demodulates the stereo difference signal which is gained by filtering the output signal of the first mixer 14 with the second lowpass filter 6 also having a passband of 0 to 15 kHz. The stereo difference signal output by the second lowpass filter 6 is input to a separation control/denoising circuit 8 which output signal is fed to the matrix circuit 9. The matrix circuit 9 generates the left and right stereo signals from the supplied stereo sum signal and separation controlled/denoised stereo difference signal. The separation control and denoising is based on a noise signal and is described in detail in the above referenced European Patent Applications of the Applicant which are incorporated by reference into this specification.

The second mixer 13 which also receives a Q-signal which is in quadrature to the 38 kHz subcarrier of the received stereo signal from the PLL circuit 4 demodulates the quadrature component of the modulated difference signal. The third lowpass filter 7 which also has a passband of 0 to 15 kHz limits the bandwidth of the quadrature component to 15 kHz. Depending on the receiver realization (with/without denoising), this band limited quadrature component is input to a filterbank for the subband filtering in a denoising system or the signal is input to a squaring unit 12, as it is depicted in fig. 5, to generate the noise indication signal. The output signal of the squaring unit 12, i.e. the noise indication signal, is input to an averaging filter 10 with enable/disable input. The averaged noise indication signal is input to the separation control/denoising circuit 8 for affecting the separation control/denoising of the stereo signal via a processing of the stereo difference signal. Alternatively, the output signal of filter 7, which is the demodulated quadrature signal, is weighted with a weighting signal generated in the control unit 11.

The control unit 11 according to the present invention controls the averaging filter 10 as described above. In this exemplary preferred embodiment the enabling and disabling of the averaging filter 10 is controlled. In a receiver with a subband filtering of the quadrature component, one or several averaging enable/disable control units control the averaging filters of each subband.

Besides the fieldstrength indication signal output by the front-end IF filter stage 2, the control unit 11 also receives the output signal of the FM demodulator 3, to determine the signal amplitude of the stereo multiplex signal and the noise indication signal output by the squaring unit 12 to determine the ratio noise indication signal amplitude to average noise indication amplitude.

As stated above, the invention increases the reliability of the noise indication by influencing the averaging of the noise indication signal for the control of the sliding stereo mono transition, the denoising or alternative frequency switching in a stereophonic FM broadcast receiver. The system according to the present invention makes the noise indication robust against distortions produced in the FM transmitter (e. g. clipping, nonlinearities) and the receiver (harmonic distortions of the FM demodulator, distortions caused by a narrow IF filter bandwidth).

## Claims

1. Method to increase the reliability of a noise indication in a stereophonic FM broadcast receiver, in which a noise indication signal is averaged for further processing,
**characterized by**
changing parameters of the averaging based on the received stereo signal.

2. Method according to claim 1,
**characterized in that**
said changing of parameters of the averaging is a selection of the low pass bandwidth of an averaging unit (10).

3. Method according to claim 1
**characterized in that**
said changing of parameters of the averaging is an enabling and disabling of an averaging unit (10).

4. Method according to any one of the preceding claims 1 or 2,
**characterized in that**
said changing of parameters of the averaging is a weighting of a demodulated quadrature signal of a difference signal derived from the received stereo signal.

5. Method according to any one of the preceding claims
**characterized in that**
said parameters are changed dependent on an instantaneous signal amplitude of a multiplex signal derived from the received stereo signal.

6. Method according to any one of the preceding claims,
**characterized in that**
said parameters are changed dependent on a ratio instantaneous noise indication signal amplitude to average noise indication signal amplitude, both derived from the received stereo signal.

7. Method according to any one of the preceding claims,
**characterized in that**
said parameters are changed dependent on an instantaneous fieldstrength of the received stereo signal.

8. Method according to any one of the preceding claims,
**characterized by**
changing respective parameters of a respective averaging based on a respective subband in which the received stereo signal or derivatives thereof are divided for processing.

9. Method according to anyone of the preceding claims,
**characterized in that**
said noise indication signal is used to control a sliding stereo to mono transition of a stereo output signal corresponding to the received stereo signal, to denoise the received stereo signal, or to perform an alternative frequency or transmission system switching in the stereophonic broadcast receiver.

10. Computer program product,
comprising computer program means adapted to perform the method steps as defined in any one of claims 1 to 9 when being executed on a computer or a digital signal processor.

11. Computer readable storage medium,
storing thereon a computer program product according to claim 10.

12. FM broadcast receiver in which a noise indication signal is averaged for further processing,
**characterized by**
a control unit (11) for changing parameters of the averaging based on the received stereo signal.

13. Receiver according to claim 12,
**characterized in that**
said changing of parameters of the averaging is a selection of the low pass bandwidth of an averaging unit (10).

14. Receiver according to claim 12,
**characterized in that**
said changing of parameters of the averaging is an enabling and disabling of an averaging unit (10).

15. Receiver according to any one of the preceding claims 12 to 14,
**characterized by**
a respective control unit for every respective subband in which the received stereo signal are divided for processing.

16. Receiver according to any one of the preceding claims 12 to 15,
**characterized in that**
said noise indication signal is used to control a sliding stereo to mono transition of a stereo output signal corresponding to the received stereo signal, to denoise the received stereo signal, or to perform an alternative frequency or transmission system switching in the stereophonic broadcast receiver.

## Patentansprüche

1. Verfahren zum Erhöhen der Zuverlässigkeit der Rausch- oder Störsignalanzeige bei einem stereophonen FM-Runkfunkempfänger, bei welchem ein Rausch- oder Störsignalanzeigesignal für eine weitere Verarbeitung gemittelt wird,
**gekennzeichnet durch**
ein Ändern von Parametern des Mittelns auf der Grundlage des empfangenen Stereosignals.

2. Verfahren nach Anspruch 1,
**dadurch gekennzeichnet,**
**dass** das Ändern der Parameter des Mittelns eine Auswahl einer Tiefpassbandbreite einer Mittelungseinheit (10) ist.

3. Verfahren nach Anspruch 1,
**dadurch gekennzeichnet,**
**dass** das Änderung der Parameter des Mittelns ein Freigeben/Einschalten und ein Sperren/Abschalten einer Mittelungseinheit (10) ist.

4. Verfahren nach einem der vorangehenden Ansprüche 1 oder 2,
**dadurch gekennzeichnet,**
**dass** das Änderung von Parametern des Mittelns ein Gewichten eines demodulierten Quadratursignals eines Differenzsignals ist, welches abgeleitet ist oder wird aus dem empfangenen Stereosignal.

5. Verfahren nach einem der vorangehenden Ansprüche,
**dadurch gekennzeichnet,**
**dass** die Parameter geändert werden abhängig von einer instantanen oder momentanen Signalamplitude eines Multiplexsignals, welches abgeleitet ist oder wird aus dem empfangenen Stereosignal.

6. Verfahren nach einem der vorangehenden Ansprüche,
**dadurch gekennzeichnet,**
**dass** die Parameter geändert werden abhängig von einem Verhältnis einer instantanen oder momentanen Rausch- oder Störungsanzeigesignalamplitude zu einer gemittelten Rausch- oder Störanzeigesignalamplitude, wobei beide abgeleitet sind oder werden aus dem empfangenen Stereosignal.

7. Verfahren nach einem der vorangehenden Ansprüche,
**dadurch gekennzeichnet,**
**dass** die Parameter geändert werden abhängig von einer instantanen oder momentanen Feldstärke des empfangenen Stereosignals.

8. Verfahren nach einem der vorangehenden Ansprüche,
**gekennzeichnet durch**
ein Ändern jeweiliger Parameter eines jeweiligen Mittelungsvorgangs auf der Grundlage eines jeweiligen Sub-Bandes, in welches oder in welche das empfangene Stereosignal oder Derivate oder abgeleitete Signale davon zum Verarbeiten unterteilt werden.

9. Verfahren nach einem der vorangehenden Ansprüche,
**dadurch gekennzeichnet,**
**dass** das Rausch- oder Störungsanzeigesignal verwendet wird, um ein Gleiten eines Stereo-zu-Monoübergangs des Stereoausgangssignals, korrespondierend zum empfangenen Stereosignal, zu steuern, um das empfangene Stereosignal zu entrauschen, oder zum Ausführen eines Umschaltens zu einer alternativen Frequenz oder zu einem alternativen Übertragungssystem im stereophonen Rundfunkempfänger.

10. Computerprogrammerzeugnis,
welches ein Computerprogrammmittel aufweist, welches ausgebildet ist, die Verfahrensschritte, wie sie durch einen der Ansprüche 1 bis 9 definiert sind, auszuführen, wenn es auf einem Computer oder einem digitalen Signalprozessor durchgeführt werden sollen.

11. Computerlesbares Speichermedium,
welches darauf ein Computerprogrammerzeugnis gemäß Anspruch 10 speichert.

12. FM-Rundfunkempfänger, bei welchem ein Rausch- oder Störungsanzeigesignal zur Weiterverarbeitung gemittelt wird,
**gekennzeichnet durch**
eine Steuereinheit (11) zum Ändern von Parametern des Mittelns auf der Grundlage des empfangenen Stereosignals.

13. Empfänger nach Anspruch 12,
**dadurch gekennzeichnet,**
**dass** das Ändern der Parameter des Mittelns eine Auswahl einer Tiefpassbandbreite einer Mittelungseinheit (10) ist.

14. Empfänger nach Anspruch 12.
**dadurch gekennzeichnet,**
**dass** das Änderung der Parameter des Mittelns ein Freigeben/Einschalten und ein Sperren/Abschalten einer Mittelungseinheit (10) ist.

15. Empfänger nach einem der vorangehenden Ansprüche 12 bis 14,
**gekennzeichnet durch**
eine jeweilige Steuereinheit für jedes jeweilige Sub-Band, in welches oder in welche das empfangene Stereosignal zur Verarbeitung unterteilt ist oder wird.

16. Empfänger nach einem der vorangehenden Ansprüche 12 bis 15,
**dadurch gekennzeichnet,**
**dass** das Rausch- oder Störungsanzeigesignal verwendet wird, um ein Gleiten eines Stereo-zu-Monoübergangs des Stereoausgangssignals, korrespondierend zum empfangenen Stereosignal, zu steuern, um das empfangene Stereosignal zu entrauschen, oder zum Ausführen eines Umschaltens zu einer alternativen Frequenz oder zu einem alternativen Übertragungssystem im stereophonen Rundfunkempfänger.

## Revendications

1. Procédé d'augmentation de la fiabilité d'une indication de bruit dans un récepteur FM stéréophonique, dans lequel un signal d'indication de bruit est moyenné en vue d'un autre traitement,
**caractérisé par**
le changement des paramètres du moyennage sur la base du signal stéréo reçu.

2. Procédé selon la revendication 1,
**caractérisé en ce que**
ledit changement des paramètres du moyennage est une sélection de la bande passante passe-bas d'une unité de moyennage (10).

3. Procédé selon la revendication 1,
**caractérisé en ce que**
ledit changement des paramètres du moyennage est une activation et une désactivation d'une unité de moyennage (10).

4. Procédé selon l'une quelconque des revendications précédentes 1 ou 2,
**caractérisé en ce que**
ledit changement des paramètres du moyennage est une pondération d'un signal démodulé en quadrature d'un signal dé différence dérivé du signal stéréo reçu.

5. Procédé selon l'une quelconque des revendications précédentes,
**caractérisé en ce que**
lesdits paramètres sont changés selon une amplitude de signal instantanée d'un signal multiplex dérivé du signal stéréo reçu.

6. Procédé selon l'une quelconque des revendications précédentes,
**caractérisé en ce que**
lesdits paramètres sont changés selon un rapport entre une amplitude de signal d'indication de bruit instantanée et une amplitude de signal d'indication de bruit moyenne, dérivées à partir du signal stéréo reçu.

7. Procédé selon l'une quelconque des revendications précédentes,
**caractérisé en ce que**
lesdits paramètres sont changés selon une intensité de champ instantanée du signal stéréo reçu.

8. Procédé selon l'une quelconque des revendications précédentes,
**caractérisé par**
le changement des paramètres respectifs d'un moyennage respectif sur la base d'une sous-bande respective dans laquelle le signal stéréo reçu ou des dérivés de celui-ci est divisé en vue d'un traitement.

9. Procédé selon l'une quelconque des revendications précédentes,
**caractérisé en ce que**
ledit signal d'indication de bruit est utilisé afin de contrôler une transition glissante stéréo/mono d'un signal de sortie stéréo correspondant au signal stéréo reçu, de supprimer le bruit du signal stéréo reçu, ou d'effectuer une commutation de fréquence alternative ou de système de transmission dans le récepteur de diffusion stéréophonique.

10. Produit de programme informatique,
comprenant un moyen de programme informatique adapté afin d'effectuer les étapes du procédé selon l'une quelconque des revendications 1 à 9 lorsqu'il est exécuté sur un ordinateur ou un processeur de signal numérique.

11. Support de stockage lisible par un ordinateur,
stockant dessus un produit de programme informatique selon la revendication 10.

12. Récepteur de diffusion FM dans lequel un signal d'indication de bruit est moyenné en vue d'un autre traitement,
**caractérisé par**
une unité de commande (11) destinée à changer les paramètres du moyennage sur la base du signal stéréo reçu.

13. Récepteur selon la revendication 12,
**caractérisé en ce que**
ledit changement des paramètres du moyennage est une sélection de la bande passante passe-bas d'une unité de moyennage (10).

14. Récepteur selon la revendication 12,
**caractérisé en ce que**
ledit changement des paramètres du moyennage est une activation et une désactivation d'une unité de moyennage (10).

15. Récepteur selon l'une quelconque des revendications précédentes 12 à 14,
**caractérisé par**
une unité de commande respective destinée à chaque sous-bande respective dans laquelle le signal stéréo reçu est divisé en vue d'un traitement.

16. Récepteur selon l'une quelconque des revendications précédentes 12 à 15,
**caractérisé en ce que**
ledit signal d'indication de bruit est utilisé afin de contrôler une transition glissante stéréo/mono d'un signal de sortie stéréo correspondant au signal stéréo reçu, de supprimer le bruit du signal stéréo reçu, ou d'effectuer une commutation de fréquence alternative ou de système de transmission dans le récepteur de diffusion stéréophonique.
